## Europäisches Patentamt
## European Patent Office
## Office européen des brevets

(11) Numéro de publication: **0 019 973**
**A1**

## (12) DEMANDE DE BREVET EUROPEEN

(21) Numéro de dépôt: **80200470.5**

(22) Date de dépôt: **19.05.80**

(51) Int. Cl.³: **G 05 D 1/02**

(30) Priorité: **21.05.79 BE 46836**

(43) Date de publication de la demande: **10.12.80**
**Bulletin 80/25**

(84) Etats contractants désignés: **AT CH DE FR GB IT LI LU NL SE**

(71) Demandeur: **Toussaint, Eric, Arzelier 16 A, B-4882 Sart (BE)**

(72) Inventeur: **Toussaint, Eric, Arzelier 16 A, B-4882 Sart (BE)**

(74) Mandataire: **Dellicour, Paul, Office de Brevets E. Dellicour rue Fabry 18/012, B-4000 Liege (BE)**

(54) **Nouveau procédé de gestion de circulation de véhicules filiguidés automoteurs.**

(57)  Le véhicule (14) est doté d'au moins deux entités de lecture (15G, 15D) pour assurer le guidage le long d'un seul conducteur (16), posé ou enfoui dans le sol et couvrant tout le circuit, le choix de l'entité commandé par l'ordinateur définissant la direction à prendre.

Les commandes transmises de l'ordinateur au véhicule (14) sont exécutées au fur et à mesure des rencontres de codes fixés dans le sol et perçus par les entités de lecture (15G, 15D).

- 1 -

<u>Nouveau procédé de gestion de circulation de véhicules
filiguidés automoteurs</u>

La présente invention concerne la gestion de circulation
de véhicules filiguidés automoteurs centralisée par ordinateur.

De plus en plus, le transport de matière est assuré actuellement par des systèmes automatiques, dont la rentabilité s'avère toujours plus efficace et ce, dans des
domaines d'exploitation multiples, tels que approvisionnement de matières dans l'industrie et desservissement,
transport de bagages dans les aéroports, gares, etc.,
distribution de matières dans les hôpitaux, les administrations, etc. Cette liste n'est pas limitative et ne
fait que suggérer les divers domaines d'application,
dans lesquels s'inscrit l'invention.

Dans tous les cas, les véhicules sont liés à un réseau
préalablement défini et on peut définir plusieurs
classes à partir de la nature des voies : rail(s) fixés
au sol (chemins de fer, ...), rail(s) suspendus ou bande
de guidage posée ou enfouie dans le sol.

On connaît le système à rail(s) fixés au sol pour chemins
de fer, métro, tramway, monorail, où la logique de commande consiste essentiellement à scinder la voie en
tronçons successifs et à verrouiller, par une signalisa-

0019973

tion adéquate, l'entrée d'un véhicule sur un tronçon si celui-ci est déjà occupé. Les voies sont reliées entre elles par des aiguillages, qui sont en fait des voies mobiles mues en translation ou rotation. Ce matériel convient particulièrement pour le transport lourd.

Le système connu à rail(s) suspendus est moins répandu. Il utilise une logique de commande tout à fait semblable mais son domaine d'application répond à des besoins particuliers.

Dans le système connu à bande de guidage posée ou enfouie dans le sol, les véhicules roulent à même le sol en suivant la bande de guidage à l'aide de capteurs. Des servo-moteurs rectifient continuellement la dérivation du véhicule qui, de ce fait, reste globalement centré sur la bande qu'il suit. Des batteries électriques rechargeables fournissent l'énergie motrice. Dans cette catégorie de réseau, on peut distinguer deux types différents, à savoir :

1. La bande de guidage n'est parcourue par aucun courant et les capteurs sont sensibles uniquement à la présence du métal. Dans ce type de réseau, existant actuellement, la gestion du trafic est assurée localement (aux aiguillages, etc.) par des micro - ou mini - computers reliés entre eux par un câblage électrique.

Les inconvénients de ce type sont les suivants :
- la gestion n'est assurée que localement, puisque les micro-ordinateurs ne couvrent pas l'ensemble du réseau ;
- la liaison entre ordinateurs n'a pour but que de transmettre plus loin l'information non résolue et il n'existe aucun pouvoir de décision unique, ce qui

0019973

s'avère indispensable dans le cas de gestion globale de dépôts, etc.
- la sensibilité au métal peut conduire à des sorties de voie suite à la présence accidentelle de pièces métalliques.

2. La bande de guidage est parcourue par un courant et, par suite, les capteurs sont sensibles au champ magnétique développé par la bande ou le câble de guidage. Les systèmes existant ont adopté une gestion semblable à celle utilisée dans le réseau à rails. Le câble enfoui dans le sol est constitué en fait de boucles indépendantes, toutes reliées à l'ordinateur quand il existe.

Ce second type, comme on le verra dans la suite, nécessite :
- un câblage électrique abondant, nécessitant une main-d'oeuvre qualifiée ;
- des connexions multiples, source d'erreurs ;
- une étude importante de l'installation électrique et de l'interface ordinateur-câblage permettant de traduire la décision de prendre une direction par une alimentation de circuit.

Le procédé de gestion de circulation suivant l'invention a été conçu pour ce dernier type de réseau de véhicules filiguidés et a pour but de remédier aux divers inconvénients décrits.

Les systèmes connus actuellement ont adopté une logique de réseau, puisque les commandes assurant la direction des véhicules agissent sur le réseau, que ce soit par l'intermédiaire de l'ordinateur ou par le biais d'interrupteurs électromagnétiques enfouis dans le sol.

La gestion centralisée par ordinateur du mouvement de véhicules filiguidés suivant l'invention, dans laquelle les commandes de direction des véhicules sont données par l'ordinateur aux véhicules et assumées par ceux-ci, est caractérisée en ce que le véhicule est doté d'au moins deux entités de lecture pour assurer le guidage le long d'un seul conducteur, posé ou enfoui dans le sol et couvrant tout le circuit, le choix de l'entité commandé par l'ordinateur définissant la direction à prendre.

Le système suivant l'invention présente la caractéristique essentielle d'adopter une logique dite de véhicule. Dans ce système le réseau ne sert qu'à transmettre des informations véhicule-ordinateur, ordinateur-véhicule et à définir le tracé. Aucune modification n'est apportée au réseau au cours de la gestion. Un seul câble, posé ou enfoui dans le sol, constitue le réseau. De ce fait, une impulsion électrique en un point quelconque du réseau sera détectée en n'importe quel autre point.

L'invention remédie à divers inconvénients des systèmes existants. Elle permet de supprimer les boucles et ainsi de diminuer le câblage de et vers l'ordinateur. L'étude de l'installation est simplifiée, elle n'exige que des préoccupations de réseau et de circulation.

Pour mieux faire comprendre l'invention celle-ci est décrite maintenant plus en détail sur la base du dessin annexé montrant en :
Figures 1 et 2 deux schémas de réseau d'un système connu avec bande de guidage parcourue par un courant ;
Figure 3 un schéma de réseau du système suivant l'invention explicitant la fonction logicielle ;

0019973

Figures 4 et 5 deux schémas de réseau du système suivant l'invention, explicitant le guidage des véhicules ;
Figures 6 et 7 deux schémas de réseau du système suivant l'invention, explicitant un type de commande.

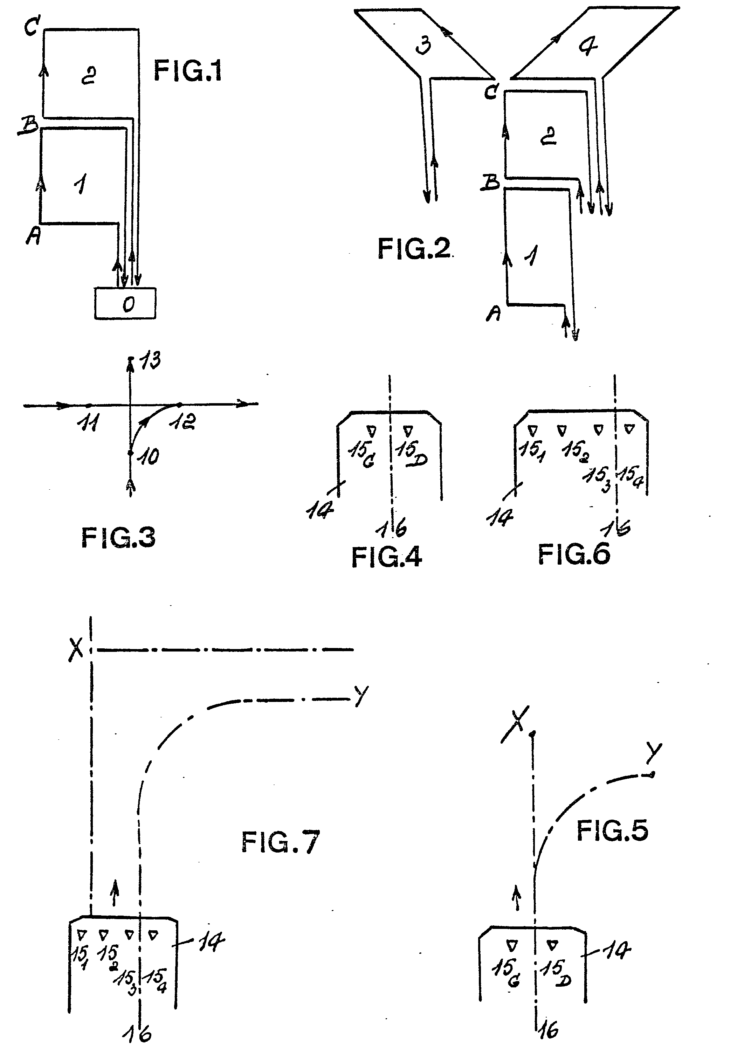

Le système de gestion de circulation suivant l'invention est du type à bande de guidage parcourue par un courant. On voit en figures 1 et 2 des schémas de réseau d'un système connu de gestion de circulation de véhicules filiguidés de ce type. Le câble enfoui dans le sol est constitué de boucles indépendantes reliées à l'ordinateur O. Le fait de ne pas alimenter la boucle 2 empêche le véhicule parcourant le tronçon AB de pénétrer sur le tronçon BC (figure 1).

Dans ce système connu la gestion des aiguillages est résolue de la même façon. En alimentant la boucle 4 et non la boucle 3, le véhicule parcourant le tronçon BC se dirigera vers D (figure 2). Le véhicule est doté d'un émetteur et d'un récepteur inductif sans contact, afin de pouvoir correspondre avec l'ordinateur.

Dans ce cas connu, la gestion de la circulation consiste à gérer l'alimentation des boucles. La présence d'un seul véhicule sur le tronçon BC est acquise par coupure de l'alimentation de la boucle antécédente 1, empêchant ainsi tout véhicule de rattraper celui qui le précède. De plus, lorsque l'ordinateur perçoit une présence sur la boucle 2, il recherche la destination de ce véhicule et décide laquelle des boucles 3 ou 4 doit être alimentée. Le prochain véhicule ne se présente sur la boucle 2 qu'après dégagement de la boucle 3 ou 4.

Les inconvénients de ce système, mentionnés précédemment, ressortent clairement des figures 1 et 2.

0019973

L'ensemble du système de gestion de circulation suivant l'invention est composé d'un ordinateur, d'un réseau et de véhicules.

La description du système de gestion suivant l'invention comporte cinq points : la fonction logicielle, la transmission d'informations, le guidage des véhicules, les types de commandes et les véhicules.

En ce qui concerne la fonction logicielle, l'ordinateur interroge successivement tous les véhicules. Si un véhicule doit communiquer une information à l'ordinateur, il envoit par effet capacitif dans le câble son identification - ce qui est facultatif - et son information. Celle-ci décrit soit son état, s'il vient d'être modifié (état de charge de la batterie, arrêt, progression, ...) ; soit sa situation, c'est-à-dire le noeud du réseau atteint. En fonction de quoi l'ordinateur lui répond la ou les commandes à exécuter.

Si le véhicule atteint un carrefour au noeud 10 (figure 3) et se trouve prêt à communiquer l'information à l'ordinateur, lorsque vient son tour d'être interrogé, il informe l'ordinateur de sa position. Ce dernier lui commande, par exemple de prendre la direction du noeud 12 et, simultanément, il verrouille le carrefour à tout autre véhicule. Lorsque le noeud 12 est atteint par le véhicule, ce dernier signale qu'il quitte le carrefour, qui est ainsi libéré.

Pour la transmission d'informations, d'une part, l'ordinateur envoit dans le réseau sur une fréquence f1 un signal électrique, qui constitue une série de bits. Outre les bits de synchronisation l'information comprend l'identification du véhicule, soit $n$ bits et la commande,

0019973

soit m bits. Les valeurs n et m sont définies par le nombre d'identités différentes susceptibles d'être formulées.

L'information transite à travers tout le réseau et est perçue par tous les véhicules, en mouvement ou à l'arrêt, car toutes les voies sont interconnectées et le câble est unique. Cependant, seul le véhicule concerné reconnaissant l'identification, percevra la suite de l'information.

D'autre part, le véhicule envoit dans le réseau, par effet capacitif, un signal électrique de la même nature. Ici, outre les bits de synchronisation, l'information comprend l'identification du véhicule (facultative), soit n bits comme ci-dessus, et l'information, soit m' bits. Il s'avère également avantageux de prévoir par ordinateur l'instant $tj$ où un véhicule, ayant quitté un noeud $i$ au temps $ti$ atteindra le noeud $j$. De ce fait, la liste des véhicules à interroger au temps $(tj - \varepsilon)$ évolue au fil des temps et se trouve réduite au strict minimum.

Pour le guidage des véhicules un signal de fréquence f2 parcourt continuellement le réseau et sert à assurer ce guidage. Suivant le type d'application le véhicule sera symétrique ou non. Dans l'exposé du système on considère un véhicule non symétrique.

En figure 4 on a représenté schématiquement un véhicule 14 doté à l'avant de deux capteurs $15_G$, $15_D$, situés symétriquement par rapport à l'axe d'avancement ou câble 16. Le signal est perçu par effet capacitif ou par induction, par un des capteurs 15 qui, après analyse de l'intensité, commande le rapprochement ou l'éloignement

0019973

du câble 16. La lecture est continue et les oscillations bien qu'incessantes, sont minimes, et, par suite, imperceptibles.

L'ordinateur choisit le capteur de lecture en fonction de la direction à donner au véhicule. Si la lecture est effectuée par le capteur $15_G$, le véhicule se dirigera vers X et, par contre, si le capteur $15_D$ assure le guidage du véhicule, celui-ci se dirigera vers Y.

Les véhicules perçoivent à l'aide de capteurs les différents types de commande à exécuter. Ces commandes pour un premier type proviennent de l'ordinateur, sous la forme numéro du véhicule et commande (arrêt, capteur gauche, ...), par envoi d'une information constituée d'une série de bits, et pour un second type proviennent du réseau, des commandes associées au réseau suite à sa configuration étant codées et enfouies dans le sol (réglage de la vitesse pour un ralentissement en vue d'une courbe, lecture par le capteur droit, ...). Les informations du réseau sont perçues par des capteurs magnétiques.

Ces commandes peuvent provenir aussi et de l'ordinateur et du réseau. Ces commandes composites sont fractionnées en deux phases. Suivant la première phase le véhicule reçoit sa commande de l'ordinateur mais il ne l'accomplira qu'après perception d'une commande complémentaire enfouie dans le sol (commande du réseau). Suivant la seconde phase le véhicule perçoit l'information codée enfouie dans le sol et est alors en mesure d'accomplir la commande reçue lors de la première phase.

Cette commande composite peut aussi être appelée commande sous condition, la condition étant le code perçu au sol. Elle est utilisée, par exemple, pour obtenir un arrêt précis. Le véhicule progresse à vitesse réduite et reçoit l'ordre de s'arrêter sous condition. Dès qu'il passe sur l'information supplémentaire codée dans le sol, il s'arrête.

La commande peut être unique ou il peut s'agir d'un train de commandes, qui constituent le programme à suivre jusqu'à la prochaine interrogation.

Le système suivant l'invention offre la possibilité d'exploiter plusieurs variantes dans la conception des composants. Ainsi, les capteurs utilisés sont de type capacitif ou inductif. Au lieu de deux capteurs, gauche et droit, on peut concevoir quatre capteurs couplés deux par deux, soit $15_1$, $15_2$, $15_3$, $15_4$ en figure 6. La détection du câble 16 est toujours obtenue par deux lectures, qui doivent être identiques, lorsque les capteurs sont correctement centrés sur le câble. En figure 6 le guidage est assuré par les capteurs $15_3$ et $15_4$. A l'approche d'un aiguillage (figure 7) l'ordinateur donne éventuellement l'ordre au véhicule de changer de capteurs. Ainsi, avec les capteurs $15_1$, $15_2$ le véhicule se dirigera vers X alors qu'en gardant les capteurs $15_3$, $15_4$, il prendra la direction de Y. Dans les deux variantes la logique est la même, les commandes provenant de l'ordinateur sont adressées aux véhicules (logique de véhicules) et non à des aiguillages ou portions de voie (logique de réseau).

La distance entre les capteurs et le câble enfoui doit être faible, de l'ordre de quelques centimètres. De ce fait, dans les installations connues actuelles de ce type de véhicules téléguidés, les capteurs faisant partie des véhicules contraignent ceux-ci à avoir une garde au sol restreinte, de quelques centimètres seulement, et les exigences de planéité du sol sont par suite rigoureuses. Suivant l'invention, pour remédier à cet inconvénient, il est prévu de mesurer la distance entre câble et capteurs et de rendre mobile en hauteur à l'aide de servo-moteurs les capteurs capacitifs et magnétiques. Dès lors, la garde au sol peut être augmentée.

En variante, la transmission d'informations peut aussi être conçue en utilisant un réseau analogue à celui des "recherches-personne", du moins pour la transmission de l'ordinateur vers les véhicules. La fréquence utilisée peut être quelconque.

En ce qui concerne la perception d'obstacles, les véhicules sont munis d'un système de détection à distance, qui peut être connecté et déconnecté par commandes provenant de l'ordinateur et/ou du réseau. Dès qu'un obstacle se trouve dans le champ de détection, le véhicule est immobilisé et en informe l'ordinateur ; dès que cet obstacle a disparu, le véhicule reprend sa route. De plus, peut être prévu un bouclier de sécurité qui, par effet de contact, provoque également l'arrêt du véhicule.

L'invention se rapporte également, bien entendu, aux installations de gestion centralisée par ordinateur de véhicules filiguidés réalisées par la mise en oeuvre du procédé décrit ci-dessus, et aux véhicules réalisés pour la mise en oeuvre dudit procédé.

Suivant l'invention encore, le réseau constitué d'un seul câble peut comporter plusieurs réseaux proprement dits indépendants et toutes les informations et caractéristiques d'un véhicule sur le point de quitter l'un de ces réseaux sont transmises par l'ordinateur gérant le mouvement des véhicules dans le premier réseau à l'ordinateur gérant le mouvement dans le nouveau réseau envisagé.

0019973

Revendications

1. Procédé de gestion centralisée par ordinateur du mouvement de véhicule filiguidés, dans lequel les commandes de direction du véhicule sont données par l'ordinateur au véhicule et assumées par celui-ci, caractérisé en ce que le véhicule (14) est doté d'au moins deux entités de lecture (15G, 15D) pour assurer le guidage le long d'un seul conducteur (16), posé ou enfoui dans le sol et couvrant tout le circuit, le choix de l'entité commandé par l'ordinateur définissant la direction à prendre.

2. Procédé de gestion suivant la revendication 1, caractérisé en ce que les commandes transmises de l'ordinateur au véhicule (14) sont exécutées au fur et à mesure des rencontres de codes fixés dans le sol et perçus par les entités de lecture (15G, 15D).

3. Procédé de gestion suivant la revendication 1, caractérisé en ce que le réseau peut s'étendre sur plusieurs niveaux, reliés éventuellement par des monte-charges, et en ce que, par conséquent, l'ordinateur est connecté directement ou indirectement avec chaque portion du réseau se trouvant à un niveau distinct.

4. Procédé de gestion suivant la revendication 3, caractérisé en ce que le réseau est constitué de plusieurs réseaux proprement dits indépendants, toutes les informations et caractéristiques d'un véhicule sur le point de quitter un de ces réseaux pour entrer dans un autre de ces réseaux étant transmises par l'ordinateur, gérant le mouvement des véhicules dans le premier réseau, à l'ordinateur gérant le mouvement des véhicules dans le nouveau réseau envisagé.

0019973

5. Procédé de gestion suivant l'une quelconque des revendications 1 à 3, caractérisé en ce que la liste des véhicules à interroger évolue au fil du temps et est fonction, pour un véhicule déterminé, de l'instant estimé d'approche de son prochain point, entraînant la transmission depuis le véhicule vers l'ordinateur de sa position.

6. Procédé de gestion suivant l'une quelconque des revendications 1 à 5, caractérisé en ce que la distance séparant les entités de lecture du câble posé ou enfoui dans le sol est optimisée, de manière à ne pas restreindre la garde au sol, par une mobilité des entités de lecture.

0019973

FIG.1

FIG.2

FIG.3

FIG.4

FIG.6

FIG.7

FIG.5

**Office européen des brevets**

# RAPPORT DE RECHERCHE EUROPEENNE

EP 80 20 0470

| Catégorie | DOCUMENTS CONSIDERES COMME PERTINENTS | | CLASSEMENT DE LA DEMANDE (Int. Cl. ³) |
|---|---|---|---|
| | Citation du document avec indication, en cas de besoin, des parties pertinentes | Revendication concernée | |
| | DE - A - 2 500 792 (HITACHI LTD.)<br>* Page 1, lignes 1-3; page 10, ligne 9 à page 13, ligne 21; figures 8,9,10A,10B,10C,11 *<br>-- | 1 | G 05 D 1/02 |
| | US - A - 3 768 586 (R. THOMPSON et al.)<br>* Colonne 1, lignes 25-38; colonne 2, lignes 11-20; colonne 3, ligne 24 à colonne 4, ligne 35; colonne 8, ligne 35 à colonne 9, ligne 4; colonne 10, lignes 39-52; colonne 14, ligne 24 à colonne 15, ligne 3; colonne 15, lignes 42-60; figures 1,2,2A, 6 *<br>-- | 2 | |
| A | DE - A - 1 902 805 (ROBERT BOSCH)<br>* Page 1, ligne 1 à page 2, ligne 15; page 6, lignes 12-22; page 8, lignes 8-15; page 9, ligne 7 à page 10, ligne 16; page 15, lignes 7-13; figures 1,2 *<br>-- | 1 | |
| A | FR - A - 2 336 726 (WESTINGHOUSE)<br>* Page 1, ligne 1 à page 2, ligne 29; page 3, ligne 23 à page 8, ligne 11; figures 1-3 *<br>-- | 1 | |
| A | FR - A - 2 163 179 (ROBERT BOSCH)<br>* Page 1, lignes 19-31; page 5, lignes 6-31; page 9, ligne 1 à page 10, ligne 35; figures 1,3 *<br>-- | 1 | |

**DOMAINES TECHNIQUES RECHERCHES (Int. Cl. ³)**

G 05 D 1/02
1/03

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 20-08-1980 | HELOT |

OEB Form 1503.1 06.78

**Office européen**
**des brevets**

**RAPPORT DE RECHERCHE EUROPEENNE**

EP 80 20 0470

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | <u>US - A - 3 734 229</u> (D. COMER) <br> * Colonne 2, ligne 67 à colonne 3, ligne 32; colonne 3, lignes 51-56; colonne 4, ligne 40 à colonne 5, ligne 38; colonne 6, ligne 57 à colonne 7, ligne 48; figures 1,3 * | 1 | |
| | ---- | | |
| | | | DOMAINES TECHNIQUES RECHERCHES (Int. Cl. ³) |

OEB Form 1503.2  06.78